# EUROPEAN PATENT SPECIFICATION

(11) **EP 4 361 319 B1**
(45) Date of publication and mention of the grant of the patent: **21.01.2026**
(21) Application number: 23168818.5
(22) Date of filing: 19.04.2023
(51) Int. Cl.: C25D 5/56, C08K 7/06, C08K 3/08, C08L 25/06

(54) **A METHOD OF MANUFACTURING AND METALLIZING POLYMER COMPOSITE**
VERFAHREN ZUR HERSTELLUNG UND METALLISIERUNG EINES POLYMERVERBUNDSTOFFES
PROCÉDÉ DE FABRICATION ET DE MÉTALLISATION D'UN COMPOSITE POLYMÈRE

(30) Priority: 31.10.2022 PL 44269922
(43) Date of publication of application: 01.05.2024
(73) Proprietor: Uniwersytet Kazimierza Wielkiego, 85-064 Bydgoszcz (PL)
(72) Inventor: Rytlewski, Piotr, 86-031 Osielsko (PL); Augustyn, Piotr, 86-005 Bia e B ota (PL)

(56) References cited:
- ISLAM AMINUL ET AL: "Direct electroplating of plastic for advanced electrical applications", CIRP ANNALS, ELSEVIER BV, NL, CH, FR, vol. 66, no. 1, 17 June 2017 (2017-06-17), pages 209 - 212, XP085116588, ISSN: 0007-8506, DOI: 10.1016/J.CIRP.2017.04.124
- AUGUSTYN PIOTR ET AL: "A review on the direct electroplating of polymeric materials", JOURNAL OF MATERIAL SCIENCE, KLUWER ACADEMIC PUBLISHERS, DORDRECHT, vol. 56, no. 27, 24 June 2021 (2021-06-24), pages 14881 - 14899, XP037503357, ISSN: 0022-2461, [retrieved on 20210624], DOI: 10.1007/S10853-021-06246-W
- GUOZHANG WU ET AL: "Enhancing the electrical and thermal stability of metallic fiber-filled polymer composites by adding tin-lead alloy", POLYMER BULLETIN, SPRINGER, BERLIN, DE, vol. 67, no. 6, 5 June 2011 (2011-06-05), pages 1105 - 1110, XP019942952, ISSN: 1436-2449, DOI: 10.1007/S00289-011-0538-4
- MICHAELI WALTER ET AL: "Electrically conductive thermoplastic/metal hybrid materials for direct manufacturing of electronic components", POLYMER ENGINEERING AND SCIENCE, vol. 49, no. 8, 1 August 2009 (2009-08-01), US, pages 1511 - 1524, XP093088049, ISSN: 0032-3888, DOI: 10.1002/pen.21374
- RYTLEWSKI PIOTR ET AL: "Copper Filled Poly(Acrylonitrile-co-Butadiene-co-Styrene) Composites for Laser-Assisted Selective Metallization", MATERIALS, vol. 13, no. 10, 1 May 2020 (2020-05-01), CH, pages 2224, XP093088918, ISSN: 1996-1944, DOI: 10.3390/ma13102224
- AMOABENG DERRICK ET AL: "Bulk soldering: Conductive polymer composites filled with copper particles and solder", COLLOIDS AND SURFACES A : PHYSIOCHEMICAL AND ENGINEERINGS ASPECTS, vol. 553, 1 September 2018 (2018-09-01), AMSTERDAM, NL, pages 624 - 632, XP093089038, ISSN: 0927-7757, DOI: 10.1016/j.colsurfa.2018.06.013

## Description

The subject of the invention is the method of manufacturing and metallizing polymer composites.

The described method assumes utilization of conventional methods of manufacturing thermoplastic polymer materials (extrusion, injection moulding) as well as modification of surface electric conductivity of the composite using laser radiation.

The description in the patent application WO2016007898A1 presents a composite including a polymer matrix, containing tin particles in the amount of 25 wt%; copper particles, also in the form of fibers, in the amount of 40 wt%; and solder flux mixed with polymer matrix at the concentration of at least 0.2 wt% used to limit or eliminate oxides in particles containing copper. This description lacks information about susceptibility of the composite to electroplating, particularly aided with laser modification.

The description of a Chinese patent application CN101407637A presents a polymer-coated composite material strengthened with fibers, including copper fibers. This composite is characterized by its content of solder (i.e. tin), which connects fibers dispersed in the polymer matrix. However, in this solution solder covers the fiber surfaces or fiber ends. Like the previous one, this description lacks information about susceptibility of the composite to electroplating, particularly aided with laser modification.

In "Direct electroplating of plastic for advanced electrical applications", Islam Aminul et al. describe a method of electroplating an injection moulded conductive plastic composite consisting of 56 vol.% (15 wt.%) Polyamide 6 (PA6), 25 vol.% (52 wt.%) of fine copper fibres (average length 0.65 mm, diameter 35 µm) and 19 vol.% (33 wt. %) of a low-melting Tin/Zinc alloy (Aminul Islam et al., CIRP Annals, Volume 66, Issue 1, 2017, Pages 209-212).

The aim of the invention was to develop a new method of producing and metallizing polymer composites using laser ablative modification and then electroplating, with the latter being a standard method for conductive materials only.

The essential element of the invention is the method of producing and metallizing polymer composite where a thermoplastic polymer material, in particular polycarbonate, polyethylene terephthalate, polylactide, polyamide, polystyrene or poly(acrylonitrile-butadiene-styrene) is fed, together with filler containing copper fibers and powdered tin at in the amount of 10-25 vol%, into the barrel of an extruder (Step I). Then the polymer material and the conductive filler are plasticized and mixed together (Step II), and the plasticized material composition is formed into the composite material (Step III). During the last step, the formed composite material is irradiated with laser beam whose power is equal to or greater than the laser ablation threshold of the thermoplastic polymer material that forms the matrix of the composite, and then electroplated (Step IV). Using poly(acrylonitrile-butadiene-styrene) as the thermoplastic polymer material is a very favorable option. Copper fibers have the length in the range from 200 to 1000 µm and diameter from 10 to 100 µm and the average diameter of tin particles is from 10 to 500 µm. It is beneficial if composite material is formed during Step III, first through extrusion and granulation, and then from the resulting granulate by injecting it into a form of injection moulder. For irradiating composite material whose matrix is poly(acrylonitrile-butadiene-styrene), it is beneficial to use a laser beam with the wavelength of 1064 nm and the power of at least 7.5 W, at the scanning speed of 2 m/s. The composite with polystyrene matrix, is preferably irradiated with laser beam at wavelength of 1064 nm, power of at least 7.3 W, and scanning speed of 2 m/s. The composite with polycarbonate matrix, is preferably irradiated with laser beam at wavelength of 1064 nm and power of at least 12.3 W, and the scanning speed of 2 m/s. The composite with poly(ethylene terephthalate) matrix is preferably irradiated with laser beam at wavelength of 1064 nm, power of at least 9.7 W, and scanning speed of 2 m/s. The composite with polylactide matrix is preferably irradiated with laser beam at wavelength of 1064 nm, power of at least 16.0 W, and scanning speed of 2 m/s. The composite with polyamide matrix, is preferably irradiated with laser beam wavelength at 1064 nm, power of at least 12.7 W, and scanning speed of 2 m/s. It is beneficial if the composite is electroplated in a solution containing sulfuric acid and copper sulfate, with the cathodic current density of 1-15 A/dm², and with anode made of copper.

The advantageous outcome of the invented method is the possibility to electroplate composites efficiently and directly due to the increased electric conductivity resulting from laser ablation of the composite matrix and from copper fibers being laser-soldered to each other with tin. Optionally, with appropriately low content of the conductive filler, the presented invention enables also selective electroplating, i.e. electroplating limited only to areas irradiated with laser. Thus, the resulting product is a composite with dielectric properties, whose irradiated areas are characterized by electrical conductivity and therefore are susceptible to electroplating, which is a conventional method for conductive materials.

The invention in its embodiment has been illustrated by auxiliary figures, which present:
Fig.1. Adhesion strength of glued joints to laser-modified thermoplastic materials;
Fig. 2. Scanning electron microscopy (SEM) images of preliminarily selected polymer materials susceptible to laser ablation;
Fig. 3. Characteristics of laser ablation of ABS, with SEM images illustrating selected parameters of ablation;
Fig. 4. Surface resistivity of ABS depending on the content of copper fibers and tin powder;
Fig. 5. Photo of ABS composite containing a mixture of copper fibers and tin powder (25 vol%) after direct electroplating;
Fig. 6. Surface resistivity as a function of the number of laser beam scans;
Fig. 7. Optical microscope images of selective electroplating.

### Example of embodiment

During the first stage of the exemplary method, investigations were conducted using polycarbonate (PC), polyethylene terephthalate (PET), polylactide (PLA) polyamide (PA6), polystyrene (PS) and poly(acrylonitrile-butadiene-styrene) (ABS) in order to select a polymer matrix most susceptible to laser ablation. The technical characteristics of the tested materials are summarized in Table 1.

**Tab. 1. Materials used and their basic parameters**

| **Material** | **Density (g/cm³)** | **Melt flow index (g/10 min)** | **Melting point (°C)** |
|---|---|---|---|
| ABS | 1.04 | 32 g/10min | 190-230 |
| PS | 1.08 | 4.50 | 180-260 |
| PLA | 1.24 | 7.44 | 210 |
| PA6 | 1.35 | 44.0 | 230-290 |
| PET | 1.38 | 25.0 | 280 |
| PC | 1.20 | 15.0 | 260-280 |

The samples were prepared by injection moulding technique, using the standard process parameters recommended for these thermoplastic materials.

Next, the samples were modified with fiber laser at the wavelength from near-infrared range (λ=1064 nm), frequency 20 kHz, scanning speed 2 m/s, and maximum power up to 20 W. Based on the conducted laser ablation tests, laser ablation thresholds, ablation energy and effective absorption coefficient were determined for the investigated polymer materials (Tab. 2).

**Tab. 2. Values of ablation threshold and effective absorption coefficient of the tested polymer materials, determined for scanning speed of 2 m/s**

| **Material** | **Ablation threshold (W)** | **Effective absorption coefficient (cm⁻¹)** |
|---|---|---|
| ABS | 7.5 | 6.50 |
| PS | 7.3 | 6.06 |
| PLA | 16.0 | 1.15 |
| PA6 | 12.7 | 2.79 |
| PET | 9.7 | 6.67 |
| PC | 12.3 | 5.57 |

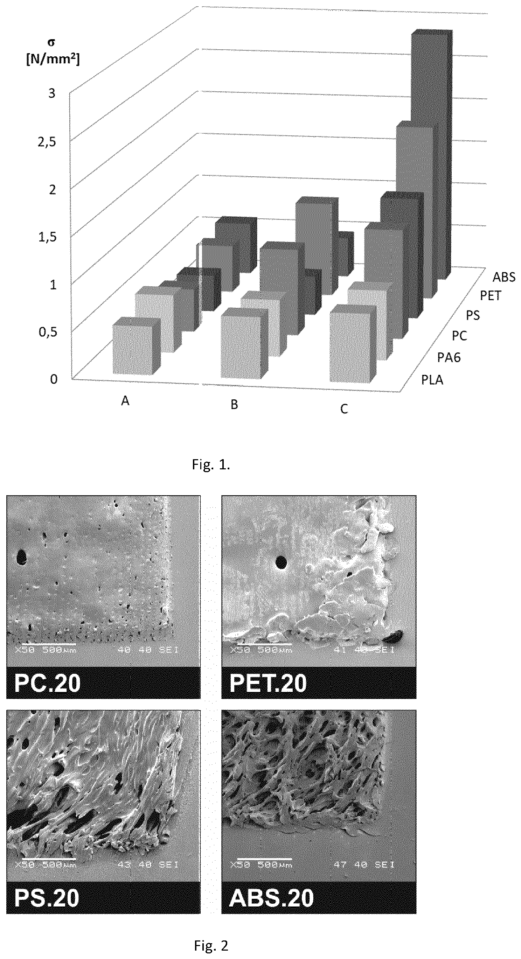

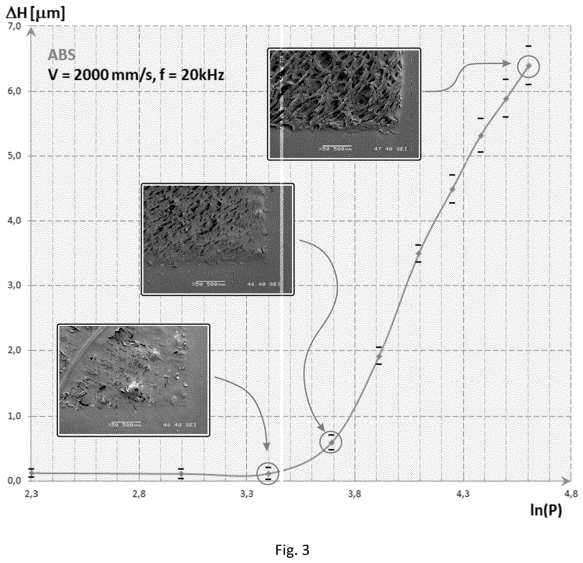

Based on the conducted tests, the matrices selected as particularly beneficial due to susceptibility to ablation processes were ABS, PC, PS and PET, which were characterized by the highest effective absorption coefficient. However, microscopic analysis and tests of adhesive strength demonstrated that the best results were achieved for ABS (Fig. 1, 2 and 3), thus ABS was used as polymer matrix in further investigations.

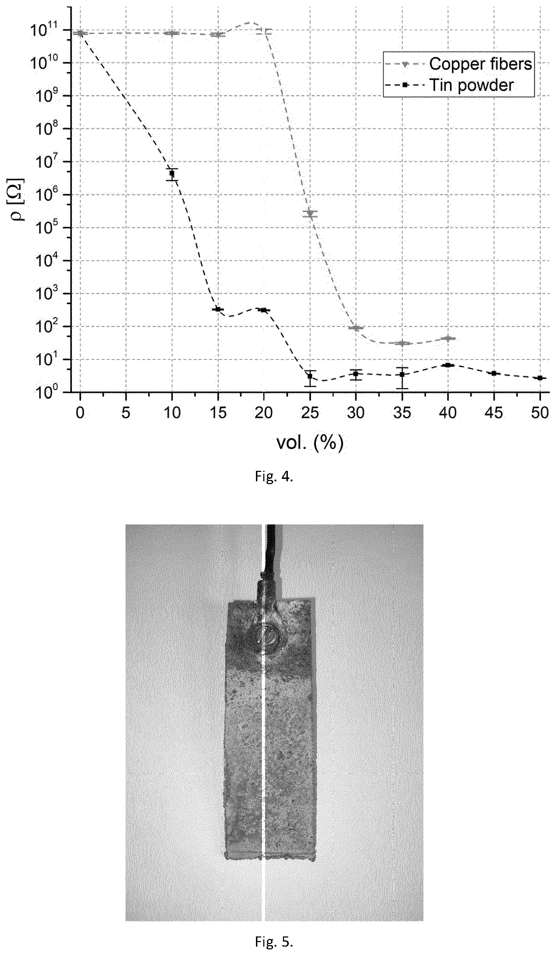

Therefore, in the main exemplary implementation the polymer composite contained ABS as thermoplastic polymer matrix. For this polymer matrix conductive filler was co-compounded (at the beneficial content from 10 to 40 vol%) in the form of copper fibers and tin powder. What should be understood in this patent description as "copper fibers" includes also generally understood alloys of this element where copper is a dominant (over 50%) component; "tin powder" should be understood in the same way. The minimum and maximum content of conductive fillers was determined based on the research on percolation thresholds of the fillers used (Fig. 4).

The most effective filler turned out to be the one containing a mixture of copper fibers and tin powder. In the sample implementation the average length of copper fibers was 550±100 µm and their diameter was ca. 65±5 µm, while the average size of particles of tin was ca. 40±25 µm. In the examples of embodiments different amounts of conductive filler were used, but the most interesting results were obtained for the content up to 25%. The volume ratio of copper fibers to tin powder should be equal or proportionally larger. In the sample implementations this ratio was in the range from 1:1 to 10:1 respectively. The share of specific elements in the composites tested in detail is summarized in Table 3.

**Tab. 3. The content of composites tested in detail**

| **ABS (% vol.)** | **Copper fibers (% vol.)** | **Tin powder (% vol.)** |
|---|---|---|
| 80 | 10 | 10 |
| 80 | 14 | 6 |
| 75 | 15 | 10 |
| 75 | 22.5 | 2.5 |

The above composites were manufactured through the extrusion and granulation techniques, and then, from the obtained granulates, plates were produced by injection moulding. For extrusion, a twin-screw extruder was used. Before extrusion, ABS was dried at 90°C for 24h. ABS with the mixture of copper fibers and tin powder were fed at an appropriate ratio from calibrated volumetric metering screw units into the plasticizing zone of a twin-screw extruder. As the mixture entered the feeder of the extruder, it was moved by the turning screws along the barrel, where it was plasticized, mixed and transported to the extrusion die. The extrusion process took place at the screw speed of 100 rpm, with the temperature of the barrel and the feed pipe 180-208°C. The streams of composite leaving the die were cooled down and then granulated with a mill blade. Thus obtained granulates were injection moulded, forming the plates of the size 60x60x1 mm. The injection parameters were as follows: injection temperature was between 210°C and 225°C (210, 215, 220, 225) and the mould temperature was 60°C.

The composites manufactured according to the invention with the filler content above 25% could be electroplated directly, with the known electroplating techniques for conductive materials. The plating bath was the solution of sulfuric acid and copper sulfate (1.0M H₂SO₄/1.0M CuSO₄) with the cathodic current density up to 10 A/dm², or a commercial galvanizing bath for initial nickel plating (Wieland, art. no. 3050400402) with the cathodic current density up to 4 A/dm², with a copper or nickel anode. An example of effective electroplating of composite is presented in Fig. 5 (filler content >25 vol%).

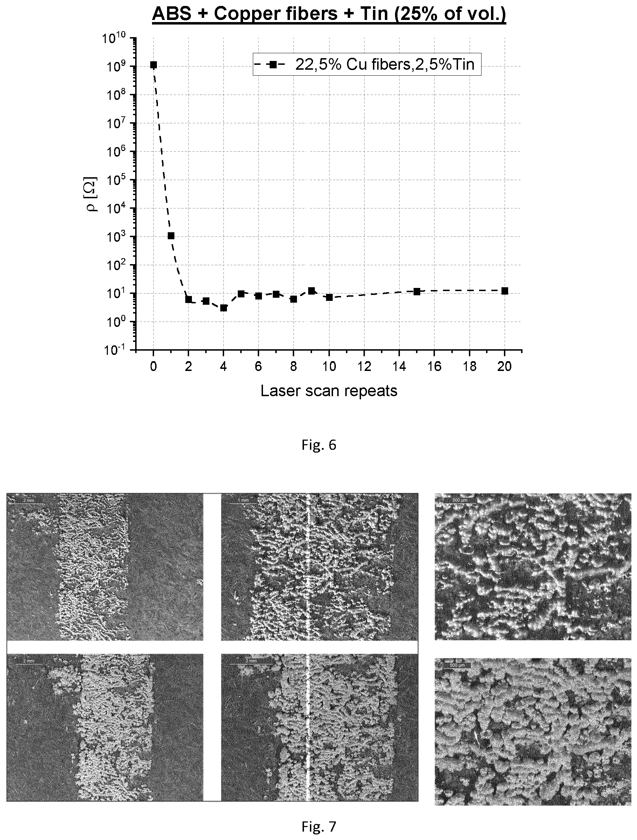

What proved as particularly good option, however, was when the conductive filler content was equal to or lower than 25 vol%, and the electrical conductivity was then significantly increased by laser irradiation. The composites were irradiated with a laser beam at wavelength of 1064 nm, scanning speed 2m/s and the power 8W, and with a different number of scanning repetitions, in order to achieve the lowest possible surface resistivity (the greatest conductivity) so as to enable electroplating of such composite in the irradiated areas. As shown, after only 2 scans with the laser beam, the surface resistivity decreased 100 million times (Fig. 6), and the composite (with copper fibers and tin powder comprising 22.5 vol% and 2.5 vol%) became electrically conductive, and thus could be electroplated selectively, that is, only on the laser scanned surface (Fig. 7). The composite was copper- or nickel-plated with conventional electroplating techniques. The solution of sulfuric acid and copper sulfate (1.0M H₂SO₄/1.0M CuSO₄) was used as plating bath and the cathodic current density was up to 10 A/dm²; alternatively, a commercial galvanizing bath for initial nickel plating was used, and the cathodic current density was up to 4 A/dm²; and a copper or nickel anode was used. The obtained composites are characterized by high electromagnetic shielding capability. They can have relatively high surface resistivity (when the conductive filler share does not exceed 25% vol.), which can be significantly reduced through laser irradiation.

The unexpected effects were mainly the result of using the laser beam power that caused polymer matrix ablation, and using a special mixture of conductive materials. The tin exposed by laser ablation of polymer matrix melts, which enables joining (soldering) of copper fibers. As a result, due to the invented method, the electrical conductivity increased in the irradiated areas of the composite. The joining (soldering) itself can partially occur already during the processes of extrusion and injection moulding, thus, if the content of such filler is large enough, the composite can be electroplated directly.

## Claims

1. The method of manufacturing and metallizing polymer composites, in which:
• Step I : thermoplastic polymer material, particularly polycarbonate, polyethylene terephthalate, polylactide, polyamide, polystyrene or poly(acrylonitrile-butadienestyrene), together with conductive filler is fed into the plasticizing zone of an extruder; then
• Step II : the polymer material is plasticized and mixed together with the conductive filler; next
• Step III : from the plasticized mixture composite material is formed,
**characterized in that** the conductive filler contains copper fibers and tin powder that together comprise from 10 to 25 vol%, and Step IV :
the composite material formed in Step III is irradiated with laser beam whose power is equal to or greater than the laser ablation threshold of the thermoplastic polymer material that forms the matrix of the composite, and then electroplated with the use of conventional techniques for conductive materials.

2. The method of processing polymer composite according to Claim 1, **characterized in that** the thermoplastic polymer material is poly(acrylonitrile-butadiene-styrene).

3. The method of processing polymer composite according to Claim 1 or 2, **characterized in that** the copper fibers have length in the range from 200 to 1000 µm and a diameter from 10 to 100 µm while the average size of tin particles is ranging from 10 to 500 µm.

4. The method of processing polymer composite according to Claim 1, 2 or 3, **characterized in that** the composite material is formed in Step III, first with the method of extrusion with granulation, and subsequently, form the obtained granulates, with the method of injection moulding.

5. The method of processing polymer composite according to Claim 1, **characterized in that** the composite material with poly(acrylonitrile-butadiene-styrene) matrix is irradiated with laser beam with the wavelength of 1064 nm and the power of at least 7.5 W, at the scanning speed of 2 m/s.

6. The method of processing polymer composite according to Claim 1, **characterized in that** the composite material with polystyrene matrix is irradiated with laser beam with the wavelength of 1064 nm and the power of at least 7.3 W, at the scanning speed of 2 m/s.

7. The method of processing polymer composite according to Claim 1, **characterized in that** the composite material with polycarbonate matrix is irradiated with laser beam with the wavelength of 1064 nm and the power of at least 12.3 W, at the scanning speed of 2 m/s.

8. The method of processing polymer composite according to Claim 1, **characterized in that** the composite material with polyethylene terephthalate matrix is irradiated with laser beam with the wavelength of 1064 nm and the power of at least 9.7 W, at the scanning speed of 2 m/s.

9. The method of processing polymer composite according to Claim 1, **characterized in that** the composite material with polylactide matrix is irradiated with laser beam with the wavelength of 1064 nm and the power of at least 16.0 W, at the scanning speed of 2 m/s.

10. The method of processing polymer composite according to Claim 1, **characterized in that** the composite material with polyamide matrix is irradiated with laser beam with the wavelength of 1064 nm and the power of at least 12.7 W, at the scanning speed of 2 m/s.

11. The method of processing polymer composite according to any of the Claims 1-10, **characterized in that** the composite is metallized in a solution containing sulfuric acid and copper sulfate, with the cathodic current density up to 10 A/dm², and with the use of a copper anode.

## Patentansprüche

1. **Verfahren zur Herstellung und Metallisierung von Polymerverbundwerkstoffen,** bei dem:
• **Schritt I:** thermoplastisches Polymermaterial, insbesondere Polycarbonat, Polyethylenterephthalat, Polylactid, Polyamid, Polystyrol oder Poly(acrylnitril-butadien-styrol), zusammen mit einem leitfähigen Füllstoff in die Plastifizierzone eines Extruders eingebracht wird, dann
• **Schritt II:** das Polymermaterial plastifiziert und mit dem leitfähigen Füllstoff vermischt wird, anschließend
• **Schritt III:** aus der plastifizierten Mischung ein Verbundmaterial gebildet wird,
**dadurch gekennzeichnet, dass** der leitfähige Füllstoff Kupferfasern und Zinnpulver enthält, die zusammen 10 bis 25 Vol.-% ausmachen, und
• **Schritt IV:** das in Schritt III gebildete Verbundmaterial mit einem Laserstrahl bestrahlt wird, dessen Leistung gleich oder größer als die Laserablationsschwelle des thermoplastischen Polymermaterials ist, das die Matrix des Verbundwerkstoffs bildet, und anschließend unter Verwendung herkömmlicher Techniken für leitfähige Materialien galvanisiert wird.

2. Verfahren zur Verarbeitung eines Polymerverbundwerkstoffs gemäß Anspruch 1, **dadurch gekennzeichnet, dass** das thermoplastische Polymermaterial Poly(acrylnitril-butadien-styrol) ist.

3. Verfahren zur Verarbeitung eines Polymerverbundwerkstoffs gemäß Anspruch 1 oder 2, **dadurch gekennzeichnet, dass** die Kupferfasern eine Länge im Bereich von 200 bis 1000 µm und einen Durchmesser von 10 bis 100 µm aufweisen, während die durchschnittliche Größe der Zinnpartikel im Bereich von 10 bis 500 µm liegt.

4. Verfahren zur Verarbeitung eines Polymerverbundwerkstoffs gemäß Anspruch 1, 2 oder 3, **dadurch gekennzeichnet, dass** der Verbundstoff in Schritt III zunächst durch Extrusion mit Granulierung und anschließend aus den erhaltenen Granulaten durch Spritzgießen gebildet wird.

5. Verfahren zur Verarbeitung eines Polymerverbundwerkstoffs gemäß Anspruch 1, **dadurch gekennzeichnet, dass** der Verbundwerkstoff mit einer Poly(acrylnitrilbutadien-styrol)-Matrix mit einem Laserstrahl mit einer Wellenlänge von 1064 nm und einer Leistung von mindestens 7,5 W bei einer Abtastgeschwindigkeit von 2 m/s bestrahlt wird.

6. Verfahren zur Verarbeitung eines Polymerverbundwerkstoffs gemäß Anspruch 1, **dadurch gekennzeichnet, dass** der Verbundwerkstoff mit einer Polystyrolmatrix mit einem Laserstrahl mit einer Wellenlänge von 1064 nm und einer Leistung von mindestens 7,3 W bei einer Abtastgeschwindigkeit von 2 m/s bestrahlt wird.

7. Verfahren zur Verarbeitung eines Polymerverbundwerkstoffs gemäß Anspruch 1, **dadurch gekennzeichnet, dass** der Verbundwerkstoff mit einer Polycarbonatmatrix mit einem Laserstrahl mit einer Wellenlänge von 1064 nm und einer Leistung von mindestens 12,3 W bei einer Abtastgeschwindigkeit von 2 m/s bestrahlt wird.

8. Verfahren zur Verarbeitung eines Polymerverbundwerkstoffs gemäß Anspruch 1, **dadurch gekennzeichnet, dass** der Verbundwerkstoff mit einer Polyethylenterephthalat-Matrix mit einem Laserstrahl mit einer Wellenlänge von 1064 nm und einer Leistung von mindestens 9,7 W bei einer Abtastgeschwindigkeit von 2 m/s bestrahlt wird.

9. Verfahren zur Verarbeitung eines Polymerverbundwerkstoffs gemäß Anspruch 1, **dadurch gekennzeichnet, dass** der Verbundwerkstoff mit einer Polylactidmatrix mit einem Laserstrahl mit einer Wellenlänge von 1064 nm und einer Leistung von mindestens 16,0 W bei einer Abtastgeschwindigkeit von 2 m/s bestrahlt wird.

10. Verfahren zur Verarbeitung eines Polymerverbundwerkstoffs gemäß Anspruch 1, **dadurch gekennzeichnet, dass** der Verbundwerkstoff mit einer Polyamidmatrix mit einem Laserstrahl mit einer Wellenlänge von 1064 nm und einer Leistung von mindestens 12,7 W bei einer Abtastgeschwindigkeit von 2 m/s bestrahlt wird.

11. Verfahren zur Verarbeitung eines Polymerverbundwerkstoffs gemäß einem der Ansprüche 1 bis 10, **dadurch gekennzeichnet, dass** der Verbundwerkstoff in einer Lösung aus Schwefelsäure und Kupfersulfat mit einer Kathodenstromdichte von bis zu 10 A/dm² und unter Verwendung einer Kupferanode metallisiert wird.

## Revendications

1. **Procédé de fabrication et de métallisation de composites polymères,** dans lequel:
• **Étape I** : un matériau polymère thermoplastique, en particulier du polycarbonate, du polyéthylène téréphtalate, du polylactide, du polyamide, du polystyrène ou du poly(acrylonitrile-butadiène-styrène), associé à une charge conductrice, est introduit dans la zone de plastification d'une extrudeuse, puis
• **Étape** Il : le matériau polymère est plastifié et mélangé avec la charge conductrice, puis
• **Étape** III : à partir du mélange plastifié, un matériau composite est formé, **caractérisé en ce que** la charge conductrice contient des fibres de cuivre et de la poudre d'étain qui, ensemble, représentent de 10 à 25 % en volume, et
• **Étape IV** : le matériau composite formé à l'étape III est irradié par un faisceau laser dont la puissance est égale ou supérieure au seuil d'ablation laser du matériau polymère thermoplastique constituant la matrice du composite, puis électroplaqué à l'aide de techniques conventionnelles pour les matériaux conducteurs.

2. Procédé de traitement d'un composite polymère selon la revendication 1, **caractérisé en ce que le** matériau polymère thermoplastique est du poly(acrylonitrile-butadiène-styrène).

3. Procédé de traitement d'un composite polymère selon la revendication 1 ou 2, **caractérisé en ce que** les fibres de cuivre ont une longueur comprise entre 200 et 1000 µm et un diamètre compris entre 10 et 100 µm, tandis que la taille moyenne des particules d'étain est comprise entre 10 et 500 µm.

4. Procédé de traitement d'un composite polymère selon la revendication 1, 2 ou 3, **caractérisé en ce que** le matériau composite est formé à l'étape III, d'abord par un procédé d'extrusion avec granulation, puis, à partir des granulés obtenus, par un procédé de moulage par injection.

5. Procédé de traitement d'un composite polymère selon la revendication 1, **caractérisé en ce que** le matériau composite à matrice de poly(acrylonitrile-butadiène-styrène) est irradié par un faisceau laser d'une longueur d'onde de 1064 nm et d'une puissance d'au moins 7,5 W, à une vitesse de balayage de 2 m/s.

6. Procédé de traitement d'un composite polymère selon la revendication 1, **caractérisé en ce que** le matériau composite à matrice de polystyrène est irradié par un faisceau laser d'une longueur d'onde de 1064 nm et d'une puissance d'au moins 7,3 W, à une vitesse de balayage de 2 m/s.

7. Procédé de traitement d'un composite polymère selon la revendication 1, **caractérisé en ce que** le matériau composite à matrice de polycarbonate est irradié par un faisceau laser d'une longueur d'onde de 1064 nm et d'une puissance d'au moins 12,3 W, à une vitesse de balayage de 2 m/s.

8. Procédé de traitement d'un composite polymère selon la revendication 1, **caractérisé en ce que le** matériau composite à matrice de polyéthylène téréphtalate est irradié par un faisceau laser d'une longueur d'onde de 1064 nm et d'une puissance d'au moins 9,7 W, à une vitesse de balayage de 2 m/s.

9. Procédé de traitement d'un composite polymère selon la revendication 1, **caractérisé en ce que** le matériau composite à matrice de polylactide est irradié par un faisceau laser d'une longueur d'onde de 1064 nm et d'une puissance d'au moins 16,0 W, à une vitesse de balayage de 2 m/s.

10. Procédé de traitement d'un composite polymère selon la revendication 1, **caractérisé en ce que** le matériau composite à matrice de polyamide est irradié par un faisceau laser d'une longueur d'onde de 1064 nm et d'une puissance d'au moins 12,7 W, à une vitesse de balayage de 2 m/s.

11. Procédé de traitement d'un composite polymère selon l'une quelconque des revendications 1 à 10, **caractérisé en ce que** le composite est métallisé dans une solution contenant de l'acide sulfurique et du sulfate de cuivre, avec une densité de courant cathodique allant jusqu'à 10 A/dm², et en utilisant une anode en cuivre.
